Europäisches Patentamt

European Patent Office

Office européen des brevets

(19)

(11) **EP 0 890 788 A1**

(12) **EUROPÄISCHE PATENTANMELDUNG**

(43) Veröffentlichungstag:
13.01.1999 Patentblatt 1999/02

(51) Int. Cl.⁶: **F23G 1/00**, F23G 5/16,
F23G 5/12, F23G 5/50,
F23L 15/04, F23J 15/02

(21) Anmeldenummer: 97111721.3

(22) Anmeldetag: 10.07.1997

(84) Benannte Vertragsstaaten:
AT BE CH DE DK ES FI FR GB GR IE IT LI LU MC
NL PT SE
Benannte Erstreckungsstaaten:
AL LT LV RO SI

(71) Anmelder:
BSBG Bremer
Sonderabfallberatungsgesellschaft mbH
28195 Bremen (DE)

(72) Erfinder:
• Chahpar Mostofizadeh, Ghalamfarsa, S.M., Prof
45257 Essen (DE)
• Aasmund H, Dipl-Ing
3670 Notodden (NO)

(54) **Verfahren und Vorrichtung zur Einäscherung eines leblosen, menschlichen Körpers**

(57) Bei dem erfindungsgemäßen Verfahren wird der den Körper enthaltenden Sarg in eine durch zwei Brenner (B0 und B1) auf Temperatur geregelte Muffel (M) transportiert, dort auf drehbare Rollen (R1 bis R3) aufgesetzt und unter Zufuhr durch Wärmeaufnahme aus dem Abgas in einem Rekuperator (RE) vorgewärmte Luft ($\dot{m}_{L1}$) verbrannt, während in einer Ausglühkammer (AK) eine Restoxidation der festen Teile aus der vorherigen Beschickung stattfindet, wobei das hierbei entstehende Abgas über zwei Kanäle (C3 und C4) in die Muffel (M) zurückströmt, und anschließend gemeinsam mit dem Verbrennungsgas einer Nachverbrennungkammer (N) (Austrittstemperatur 850 bis 900° C, Sauerstoffgehalt von 10 bis 12 Vol. %) zugeführt wird, der sich der Wärmeaustausch im Rekuperator (RE) anschließt.

Die erfindunggemäße Vorrichtung besteht u.a. aus einer Muffel (M) mit einem quader- (MQ) und einem pyramidenförmigen Teil (MP), mit drei darin angeordneten, drehbaren Rollen sowie 6 Öffnungen (D1 bis D6) oberhalb und 6 Öffnungen (D7 bis D12) unterhalb dieser zur Zufuhr von Verbrennungsluft, wobei unterhalb der Muffel (M) eine quaderförmige Ausglühkammer (AK) mit einem Ausglühbrenner (B3) vorgesehen ist, welche durch zwei Drehklappen (DK1 und DK2) gegen die Muffel(M) und gegen die Atmosphäre abgedichtet ist. An die Muffel (M) schließt sich über zwei Durchtritte (DT1 und DT2) eine Nachverbrennungskammer (N) mit einem quader-(NQ) und einem pyramidenförmigen Teil (NP) an, wobei der erstere einen senkrechten Abgaskanal (C1) mit einem darin enthaltenen Nachbrenner (B2) und einem weiteren, senkrechten Abgaskanal (C2) mit einem darin intergrierten Rekuperator (RE) besitzt.

FIG.1

EP 0 890 788 A1

**Beschreibung**

Die Erfindung betrifft ein Verfahren und eine Vorrichtung zur Einäscherung leblosen, menschlichen Körpers, welcher sich in einem Sarg befindet.

Die Einäscherung stellt eine recht alte Methode der Bestattung dar. Die „technische Einäscherung" findet jedoch ihre Anfänge erst im 18. Jahrhundert. Sie erfuhr im 19. Jahrhundert eine staffle Weiterentwicklung. So wurden bereits 1876 die Grundsätze für die Feuerbestattung in einem ersten europäischen Kongreß in Dresden aufgestellt. Hierbei wurden insbesondere die Forderungen bezüglich einer vollständigen Verbrennung, der Geruchsvermeidung, der Reinheit der Asche sowie eines wirtschaftlichen Betriebes hervorgehoben.

Die ersten Einäscherungsöfen wurden als Flammöfen mit einem eigenen Gasgenerator ausgeführt. Dabei wurde das im einem separaten Vergasungsraum aus Kohle erzeugte Gas mit Verbrennungsluft vermischt und verbrannt. Die heißen Abgase dienten dann zur Durchführung der Einäscherung. Später wurden Heißluftöfen eingesetzt, bei denen die Einäscherung durch heiße Luft erfolgte, die durch Wärmeaustausch mit heißen Abgasen erzeugt wurde. Die aufwendige Gaserzeugung wurde mit fortschreitender Entwicklung der Öfen durch Gasbrenner ersetzt, was zu einer wesentlichen Vereinfachung der Ofenkonstruktion führte. Danach spielte die Gestaltung der Brennkammer zur Durchführung der Einäscherung die wesentliche Rolle. Hier setzte sich im wesentlichen der Etagenofen durch, der heute noch in einer Vielzahl von Einäscherungsanlagen verwendet wird. Kennzeichnend für den Etagenofen ist die Anordnung des feststehenden, feuerfesten Rostes angeordnet in einer Muffel, die darunter befindliche Aschenentnahme und die Abgasführung in Richtung der herabfallenden, verbrannten oder verbrennenden Teile aus der Einäscherung. Neben dem gasbeheizten Etagenofen sind auch vereinzelt elektrisch beheizte Öfen und Flachbettöfen vorzufinden. Letztere bauen zwar sehr kompakt, haben jedoch den Nachteil der aufwendigen und unbequemen Aschenentnahme. Elektrisch beheizte Öfen bauen ebenso kompakt, haben jedoch einen hohen Primärenergiebedarf und verursachen durch hohe Temperaturen Stickoxide.

Die verbrennungstechnische und die konstruktive Seite sowie die Automation der Beschickung und der Aschenentnahme prägten bis Mitte des 20. Jahrhunderts die Weiterentwicklung von Einäschetungsanlagen, über deren Grundformen im Buch „Feuerbestattung, Autor Fritz Schumacher, Gebhardt's Verlag 1939" in ausführlicher und übersichtlicher Form berichtet wird. Gesetze und Verordnungen zur Einäscherung regelten bis weit über die Hälfte des 20.Jahrhunderts überwiegend die behördlichen Vorgänge und nur in geringem Maße die „Technik" der Einäscherung. Auch hinsichtlich der Qualität der anfallenden Abgase wurden lediglich Forderungen allgemeiner Art gestellt, z.B. Vermeidung von Geruchs- und Rußbildung. Erst in neuerer Zeit wurden in der Bundesrepublik Deutschland Richtlinien ausgearbeitet und strengere Gesetze zur Vermeidung von Emissionen erlassen. Die VDI-Richtlinie 3891 „Emissionsminderung Einäscherungsanlagen", in der neusten Fassung (Ausgabe 1992) enthält zahlreiche Hinweise und Empfehlungen für Maßnahmen zur Emissionsminderung. Verbindlich werden die bei der Einäscherung entstehenden Abgasemissionen zur Zeit durch die „27. Verordnung zur Durchführung des Bundes-Immissionsschutz-Gesetzes, Verordnung über Anlagen zur Feuerbestattung, 27. Blmsch V vom 19. März 1997" geregelt. Darin sind Grenzwerte für Nachbrennungstemperatur, Kohlenmonoxid, organische Stoffe, Gesamtstaub sowie Dioxine und Furane festgelegt. Die Einhaltung dieser Grenzwerte, die Beachtung der o. g. VDI-Richtlinie, ein automatischer Betrieb ohne Störungen und Handeingriffe sowie die Forderung nach einem niedrigen Energiebedarf führen nach dem Stand der Technik zu einer sehr aufwendigen Gestaltung von Einäscherungsanlagen. Zur Einhaltung der Grenzwerte im Abgas wird meistens eine Verfahrenskette bestehend aus mehreren Reinigungsschritten eingesetzt. Bekannt sind hierfür Abgaswäsche, katalytische Oxidation, katalytische Reduktion mit Dosierung ammoniakalischer Verbindungen, Adsorption durch Aktivkohle, Reaktion mit Kalk, mechanische Filtration mit Gewebefilter oder mit rotierenden Schüttungen etc. Die Kombination solcher Schritte bedingt einerseits einen hohen Kostenaufwand und verursacht andererseits komplexe Verhältnisse während des Betriebes.

Neben der Abgasqualität spielen die Qualität und der Umgang mit der nach der Oxidation für die Urne bestimmte, verbleibende Asche eine entscheidende Rolle. Dieser Punkt wird in der Bundesrepublik Deutschland durch entsprechende Gesetzte und Verordnungen der Bundesländer geregelt. Danach sind Einäscherungsanlagen so zu errichten, daß die Asche rein, vollständig und unvermischt gewonnen werden kann. Diese Forderung kann nur durch ein Ausglühen der festen, teilweise noch unverbrannten Bestandteile aus der Hauptverbrennung erfüllt werden. Bei ausgeführten Einäscherungsöfen erfolgt das Ausglühen in einer hierfür vorgesehenen Ausglühkammer, welche durch einen separaten Ausglühbrenner beheizt wird. Gleichzeitig durchströmt das Abgas aus dem Muffelbereich die Ausglühkammer, vermischt sich mit dem dort entstehenden Abgas und gelangt in die nachgeschaltete Abgaskühlung. Diese Abgasführung hat zwei wesentliche Nachteile: einerseits wird das heiße Abgas des Ausglühbrenners ohne feuerungstechnische Nutzung dem Abgas aus der Muffel zugesetzt, andererseits wird ein Mitreißen der noch nicht ausgeglühten Teile aus der Einäscherung begünstigt. Mitgerissene Teile wirken aufgrund ihres Kohlenstoffgehaltes wie Aktivkohle und adsorbieren während des Abkühlens Schadstoffe, unter anderem auch Dioxine und Furane. Die der Anlage zu entnehmende Filterasche kann daher hohe Schadstofffrachten aufweisen,

Ein weiteres Problem ist durch den ungenügenden Transport eingeäscherter Teile bedingt. In Etagenöfen bleiben häufig eingeäscherte, feste Teile im Bereich des feststehenden Rostes ( Sargeinfuhrebene) stecken. Sie erreichen ohne fremde Hilfe nicht die Ausglühkammer. Hier wird durch einen Handeingriff, z.B. durch Stochern mit einer Metallanze, Abhilfe geschaffen. Dazu muß der Ofen geöffnet werden, was abgesehen von einem zusätzlichen Energiebedarf ein Sicherheitsproblem darstellt.

Auch der Energiebedarf von Einäscherungsanlagen liegt recht hoch und führt zu entsprechend hohen Betriebskosten. Dies ist in den großen Luftzahlen zwischen 3 und 4 begründet, die in bestehenden Anlagen aus Materialgründen und bedingt durch die Verfahrensführung eingestellt werden. Die Aufheizung und Förderung des Überschußluftanteils erfordert einen hohen thermischen und elektrischen Energiebedarf.

Der Erfindung liegt die Aufgabe zugrunde, zur Einäscherung leblosen, menschlichen Körpers ein Verfahren und eine Vorrichtung mit einem hohen Ausbrand der Abgase und der der Urne zuzuführenden Asche zu schaffen und dabei einen niedrigeren Energiebedarf, eine kürzere Einäscherungszeit und einen Betriebsablauf ohne jeglichen Handeingriff zu erreichen.

Diese Aufgabe wird erfindungsgemäß nach dem Patentanspruch 1 gelöst.

Der wesentliche Gedanke ist der folgende: Der Sarg mit dem darin enthaltenen Körper wird aus einer gekapselten Schleuse in eine durch zwei Brenner aufgeheizte, temperaturgeregelte Muffel eingeführt und auf drehbare Rollen stoßarm aufgesetzt, wobei unterhalb und oberhalb dieser Rollen vorgewärmte Verbrennungsluft zugeführt wird, wodurch sequentiell die Verbrennung des Lackes am Sarg, die Verbrennung des Holzwerkstoffes und die Verbrennung des Körpers bei vorgegebenen Luftzahlen ablaufen und ein heißes Abgas erzeugen, welches gemeinsam mit dem Abgas aus einer Ausglühkammer in entgegengesetzter Richtung der Aschenentnahme und der von den Rollen herabfallenden, nahezu vollständig oxidierten Teile aufwärtsströmt, anschließend in eine Nachverbrennungskammer gelangt, dort mit Hilfe einer in Strömungsrichtung weisende Brennerflamme von oxidierbaren organischen Stoffen befreit wird, und nach ausreichender Verweilzeit Wärme in einem Rekuperator an die Verbrennungsluft abgibt, die nach Erwärmung in die Muffel eintritt, deren Wände so bemessen sind, daß sie die während der Lack- und Holzverbrennung freiwerdende Wärme teilweise speichern und diese während der Körperverbrennung wieder abgeben.

Bei der Durchführung des Verfahrens ist es vorteilhaft, die in der Muffel nahezu vollständig oxidierten Teile aus der Einäscherung durch Drehung der Rollen um ihre Längsachse nach Ablauf der Oxidationszeit herabfallen zu lassen und mit einer ersten, oberen Drehklappe aufzufangen, welche ihrerseits durch Drehung die aufgefangenen Teile in eine Ausglühkammer befördert, die mit einer zweiten, untereren Drehklappe abschließt und worin das Ausglühen durch eine Brenneflamme durchgeführt wird, deren Abgas über einen Kanal in die Muffel gelangt und zur Aufheizung bzw. Verbrennung des nächsten, bereits eingeführten Sarges beiträgt.

Mit besonderem Vorteil lassen sich auch die Verfahrensschritte nach den Ansprüchen 2 bis 9 anwenden.

Das beschriebene Verfahren ermöglicht einen vollständigen Ausbrand der Asche, benötigt eine kurze Einäscherungszeit (55 Minuten für eine Körpermasse von 75 kg) bei niedrigen Energieverbräuchen (Erdgasbedarf kleiner als 26 $m_n^3$ und elektrischer Energiebedarf kleiner als 22 kWh je Einäscherung für 75 kg Körpermasse) und entläßt ein Abgas mit Schadstoffkonzentrationen, die unterhalb der Grenzwerte nach der Verordnung über Anlagen zur Feuerbestattung - 27. Blmsch V - liegen. Handeingriffe zur Entfernung der Asche und zur Entfernung blockierender Teile sind nicht erforderlich, wodurch das gesamte Verfahren vollständig automatisiert werden kann.

Zur Durchführung des erfindungsgemäßen Verfahrens benutzt man eine Vorrichtung gemäß Anspruch 10. Diese Vorrichtung hat eine kompakte Anordnung und den Vorteil, daß verfahrensbedingte Wärmeübertragungs- und Strömungsprobleme in geeigneter Weise gelöst werden. Die Muffel besteht aus einem pyramidenförmigen Unterteil und einem quarderförmigen Oberteil, in deren Anschlußebene drei drehbare Rollen senkrecht zur Einfuhrachse des Sarges zur Aufnahme des Sarges vorgesehen sind, wobei sich unterhalb und oberhalb der Rollen Öffnungen für die Zufuhr der Verbrennungsluft befinden, während zwei oberhalb des Sarges angebrachte Brenner die Aufheizung und die Temperaturregelung der Muffel übernehmen. Zur Realisierung der Rollen kann vorteilhaft eine Vorrichtung gemäß DE 196 37 509 benutzt werden.

An den quarderförmigen Teil der Muffel schließt sich eine ebenso aus einem quaderförmigen und einem pyramidenförmigen Teil zusammengesetzte Nachverbrennungskammer an, mit einer in gleicher Höhe mit der Muffel angeordneten Decke sowie einer gemeinsamen senkrechten Wand, welche zwei Durchtritte zur Führung des Abgases aus der Muffel enthält und mit einer weiteren, senkrechten und mit der Decke verbundenen Wand einen senkrechten Abgaskanal bildet, in den ein Brenner zur Nachverbrennung der organischen Schadstoffe im Abgas eingebaut ist, und aus dem das senkrecht abwärts strömende Abgas nach Umlenkung durch den pyramidenförmigen Teil der Nachverbrennungskammer durch senkrechte Aufwärtsströmung in einen weiteren senkrechten Kanal gelangt, oberhalb dessen ein Rekuperator zur Abgaskühlung und Verbrennungsluftvorwärmung angeordnet ist, durch den luftseitig die von einem Ventilator geförderte Verbrennungsluft zur Muffel und zur Nachverbrennungskammer strömt. Weitere vorteilhafte Merkmale der erfindungsgemäßen Vorrichtung resultieren aus den Ansprüchen 11 bis 24.

Die untere Begrenzungsfläche des pyramidenförmigen Teils der Muffel wird durch eine erste, obere Drehklappe zur Aufnahme der während der Einäscherung von den Rollen herabfallenden und nahezu vollständig oxidierten Teile begrenzt, wobei diese nach Ablauf der Oxidationszeit durch Drehung der ersten, oberen Drehklappe in eine unterhalb dieser angeordnete Ausglühkammer befördert werden, die mit einem hierfür vorgesehenen Ausglühbrenner beheizt wird und ihrerseits unten mit einer zweiten, unteren Drehklappe zwecks Ascheabzug abschließt, wobei für den Abzug des beim Ausglühen entstehenden Abgases zwei Kanäle vorgesehen sind, die die Ausglühkammer mit der Muffel etwa in Höhe der Rollenebene verbinden.

Ein Ausführungsbeispiel der Erfindung ist in den nachfolgenden Zeichnungen dargestellt und wird im folgenden näher erläutert. Es zeigen:

Fig. 1          : Ablaufschema des erfindungsgemäßen Verfahrens und Funktionsweise der erfindungsgemäßen Vorrichtung

Fig. 2 bis 6    : Aufbau der wesentlichen Komponenten der erfindungsgemäßen Vorrichtung

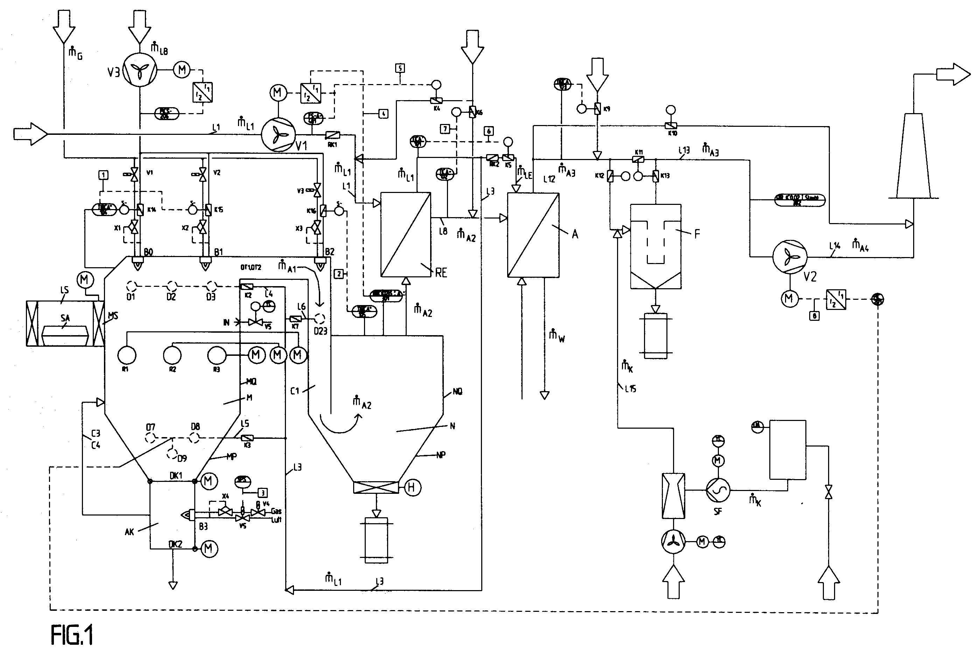

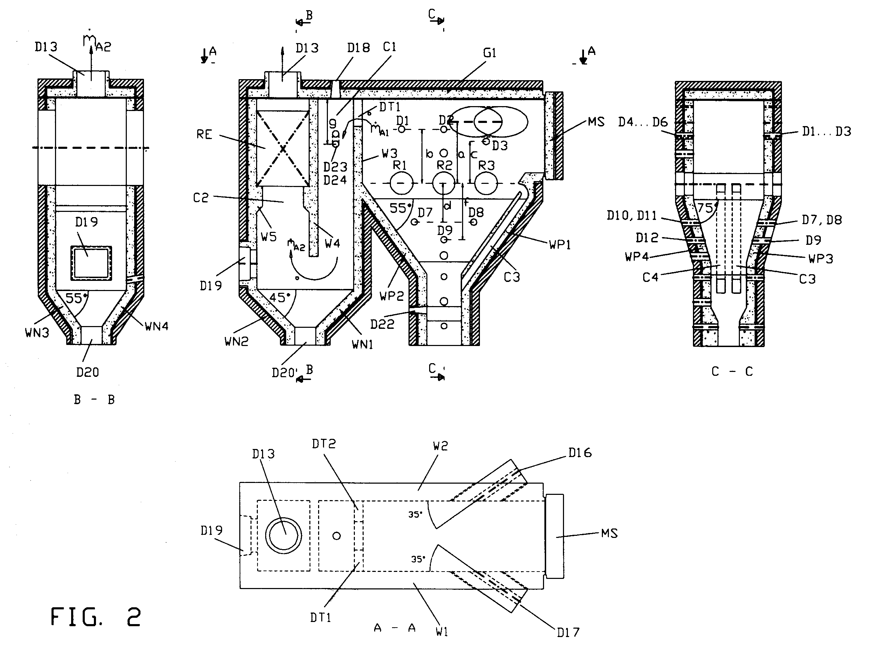

Gemäß Figur 1 wird der Sarg SA mit dem darin enthaltenen Körper bei offenem Muffenschieber MS aus einer zur Atmosphäre dichten Schleuse LS durch eine Transportvorrichtung in die Muffel M transportiert und dort auf die horizontal angeordneten drehbaren Rollen R1, R2 und R3 aufgesetzt. Danach wird die in die Schleuse integrierte Transportvorrichtung zurückgefahren und der Muffelschieber MS geschlossen. Nach wenigen Sekunden beginnt dann der Sarg zu verbrennen. Die Zufuhr der Verbrennungsluft in die Muffel M erfolgt gemäß Fig. 1 und 2 unterhalb der Rollen durch die Öffnungen D7 bis D12 und oberhalb der Rollen durch die Öffnungen D1 bis D6. In der Muffel laufen sequentiell die Teilvorgänge, Lackverbrennung am Sarg, Verbrennung des Sargwerkstoffes, Verdampfung des Wasseranteils des Körpers und Verbrennung der organischen Masse des Körpers ab. Hierbei werden verschiedene Luftzahlen eingehalten. Die Luftzahl ist definiert als das Verhältnis des tatsächlichen Luftmassenstroms zu dem stöchiometrischen Luftmassenstrom. Bei einem Körpergewicht von 75 kg werden bei der Verbrennung des Lackes und des Sargwerkstoffes eine Luftzahl von 1,6 bis 1,8 eingehalten, während die Luftzahl bei der Verbrennung des Körpers 2,2 bis 2,5 beträgt. Diese Werte haben sich in Versuchen als günstig herausgestellt.

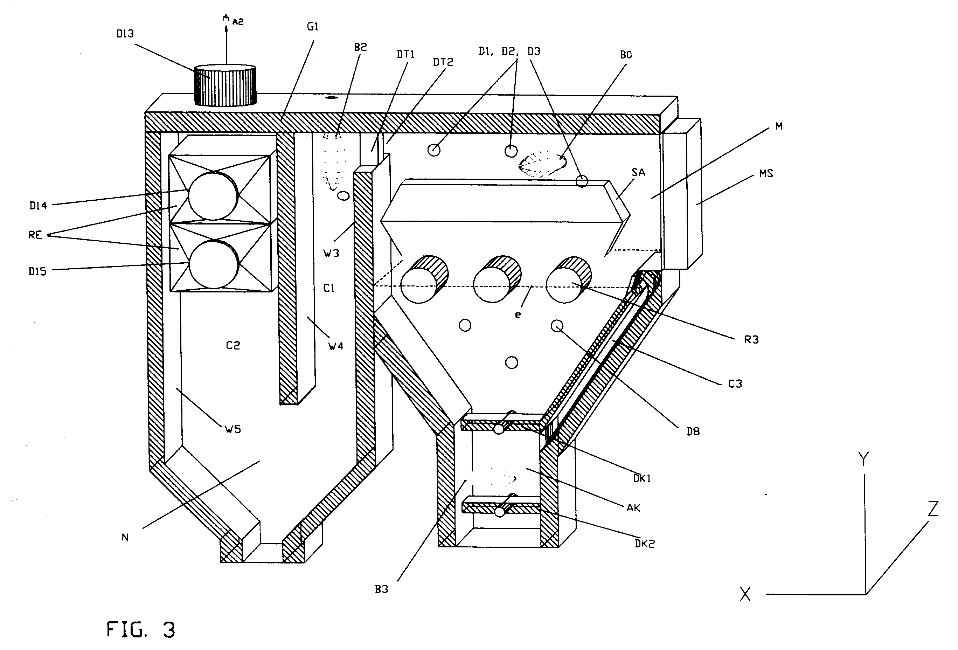

Das während der Verbrennung entstehende Abgas $\dot{m}_{A1}$ (Fig. 1 und 2) strömt nach oben und gelangt durch zwei Durchtritte DT1 und DT2 (Fig. 3, 4 und 5) in die angeschlossene Nachverbrennungskammer N (Fig. 1 und 2). Bei der Lack- und Holzverbrennung ist die Abgastemperatur am Austritt der Muffel M (unmittelbar vor DT1 und DT2) immer höher als 700°C. Während der Körperverbrennung kann allerdings die Abgastemperatur unterhalb von 650°C absinken. Zur Erhöhung der Temperatur sind in der Muffel M zwei geregelte Muffelbrenner B0 und B1 angeordnet, die automatisch eingeschaltet werden, sobald die Abgastemperatur am Austritt der Muffel unter 650°C fällt. Diese Brenner regeln dann die Abgastemperatur durch Änderung der Brennstoffzufuhr solange, bis ihre Leistung auf 20% der vollen Leistung von jeweils 230 kW gefallen ist, wodurch eine Abschaltung erfolgt.

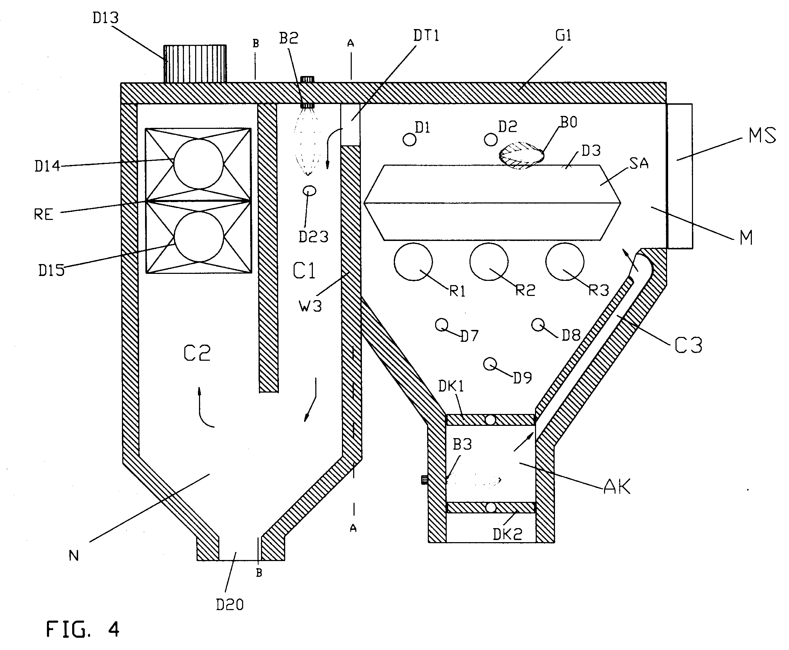

Die durch Verbrennung oxidierten Teile des Sarges und des Körpers fallen von den Rollen im pyramidenförmigen Teil MP der Muffel M herab und werden von einer ersten, oberen Drehklappe DK1 aufgefangen (Fig. 3 und 4). Nach ca. 45 bis 55 min. ist der Verbrennungsvorgang in der Muffel M beendet. Auf den Rollen R1 bis R3 noch liegengebliebene Teile werden durch Drehung dieser Rollen in beide Richtungen zum Fall gebracht und auf der ersten, oberen Drehklappe DK1 gesammelt. Bereits dort befindliche Teile aus demselben Einäscherungszyklus werden zu einer weiteren Oxidation durch die Öffnungen D9 und D12 (Fig. 2) mit vorgewärmter Luft versorgt. Nach Beenden des Verbrennungsvorganges in der Muffel werden die Muffelbrenner B0 und B1 abgeschaltet, sofern diese vorher noch im Betrieb waren. Danach werden die verbrannten Teile durch Drehen der ersten, oberen Drehklappe DK1 in eine Ausglühkammer AK (Fig. 2 und 4) befördert. Die erste, obere Drehklappe DK1 dreht sich dann in ihre Ausgangslage zurück, und die Beschickung der Muffel M mit dem nächsten Sarg kann beginnen.

In der Ausglühkammer AK erfolgt dann das Ausglühen der noch verbliebenen, festen Teile aus der Einäscherung, um die Restoxidation der noch nicht vollständig verbrannten organischen Bestandteile durchführen zu können. Der Boden der Ausglühkammer AK wird durch eine zweite, untere Drehklappe DK2 gebildet (Fig. 3 und 4), die beim Ausglühen einen Austritt der noch zu oxidierenden, festen Teile verhindert und den Abschluß zur Atmosphäre bildet. Die Wärmezufuhr zum Ausglühen erfolgt durch einen Ausglühbrenner B3 mit einer Leistung von 90 kW (Fig. 3 und 4). Das Ausglühen dauert ca. 20 bis 25 min. Nach dieser Zeit wird der Ausglühbrenner B3 abgeschaltet und die zweite, untere Drehklappe DK2 gedreht, so daß die vollständig oxidierten Teile (Asche) in einen Aschebehälter abgefüllt werden können. Danach dreht sich die zweite, untere Drehklappe DK2 in ihre Ausgangslage zurück, und der Brenner B3 wird auf 20% seiner Leistung zugeschaltet. Das während des Ausglühens entstehende Abgas gelangt durch zwei in der Muffelwand WP1 des pyramidenförmigen Teils MP der Muffel M vorgesehene Kanäle C3 und C4 (Fig. 2) in den Bereich zwischen dem Muffelschieber MS und dem neu eingeführten Sarg und bildet hierdurch eine zusätzliche Wärmequelle.

Die während der Einäscherung (Verbrennung in der Muffel M und in der Ausglühkammer AK) entstehenden Abgase enthalten noch unverbrannte, organische Stoffe sowie Kohlenmonoxid. Sie werden nach Verlassen der Muffel M durch die vorgesehenen Durchtritte DT1 und DT2 in einer angeschlossenen Nachverbrennungskammer N behandelt (Fig. 1, 3 und 4). Dazu strömt das resultierende Abgas $\dot{m}_{A1}$ durch einen senkrechten Kanal C1 nach unten und wird mittels eines Nachbrenners B2 (Leistung 230 kW), dessen Flamme in die abwärts gerichtete Strömung weist, auf Temperaturen von 850 bis 900°C gebracht, sofern diese Größenordnung der Temperatur vorher nicht erreicht wurde. Danach wird das entstehende Abgas $\dot{m}_{A2}$ im pyramidenförmigen Teil NP der Nachverbrennungskammer N umgelenkt und strömt durch einen 'weiteren Kanal C2 aufwärts zu einem nachgeschalteten Rekuperator RE (Fig. 3, 4 und 5). Hier gibt das Abgas $\dot{m}_{A2}$ Wärme an die ankommende Verbrennungsluft $\dot{m}_{L1}$ ab, welche durch den Ventilator V1 über die Leitung L1 in die Luftseite des Rekuperators RE gefördert wird. Das Abgas $\dot{m}_{A2}$ erreicht in der Nachverbrennungskammer N eine Verweilzeit von über 0,5 s bei Anwesenheit hoher Turbulenz, wodurch ein ausreichender Ausbrand gewährleistet ist. Im Rekuperator RE kühlt sich das Abgas $\dot{m}_{A2}$ auf Temperaturen von 600 bis 650°C ab und wird durch die Leitung L8 abgezogen. Im Gegenzug wird die Verbrennungsluft $\dot{m}_{L1}$ auf Austrittstemperaturen von 350 bis 450°C aufgeheizt. Sie wird nach dem Rekuperator RE durch die Leitung L3 über drei Abzweige L4, L5 und L6 (Fig. 1), die verstellbare Blenden K2, K3 und K7 enthalten, dem quaderförmigen Teil MQ (Öffnungen D1 bis D6), dem pyramidenförmigen Teil MP (Öffnungen D7 bis D12) der Muffel M sowie dem Kanal C1 der Nachverbrennungskammer (Öffnungen D23 und D24) zugeführt.

Der Massenstrom der zugeführten Verbrennungsluft $\dot{m}_{L1}$ richtet sich nach dem am Austritt der Nachbrennungskammer N herrschenden Sauerstoffgehalt, der 10 bis 12 Volumenprozent beträgt. Mit dem Sauerstoffgehalt wird die Drehzahl des Ventilators V1 und damit der Massenstrom $\dot{m}_{L1}$ verändert. Sollte sich eine zu hohe Temperatur der Luft nach dem Rekuperator RE ergeben, so wird ein Teil dieser Luft $\dot{m}_{LE}$ dem den Rekuperator verlassenden Abgasmassenstrom $\dot{m}_{A2}$ in der Leitung L8 zugesetzt, wodurch die Temperatur durch nachströmende Luft abnimmt. Die Führungsgröße hierfür ist die Temperatur der Luft hinter dem Rekuperator RE, die bei Überschreitung von 470°C eine geregelte Klappe K5 öffnet. Die überschüssige Luft $\dot{m}_{LE}$ und das Abgas $\dot{m}_{A2}$ am Austritt des Rekuperators RE vermischen sich und werden anschließend in einem Abhitzekessel A durch Wärmeabgabe an Kühlwasser $\dot{m}_W$ auf Temperaturen von 130 bis 1 50°C abgekühlt (Fig. 1). Hinter dem Abhitzekessel A wird feine Aktivkohle $\dot{m}_K$ vermischt mit Kalk in den resultierenden Abgasstrom $\dot{m}_{A3}$ dosiert, um restliche Belastungen, insbesondere Dioxine, Quecksilber, Salz- bzw. Flußsäure und andere Schwermetalle aufzunehmen. In einem nachgeschalteten Gewebefilter F erfolgt die Abscheidung der mitgeführten Aktivkohle einschließlich Kalk und sonstiger Stäube, die anschließend entsorgt werden müssen. Die Forderung des gereinigten Abgases $\dot{m}_{A4}$ aus der Leitung L13 übernimmt ein Saugzugventilator V2, dessen Drehzahl über den Unterdruck in der Muffel M verändert wird. Das gereinigte Abgas $\dot{m}_{A4}$ gelangt dann über die Leitung L14 und einen Kamin ins Freie.

Um Überhitzungen bei Störungen zu vermeiden, wird vor dem Rekuperator RE durch die Regelklappe K4, vor dem Abhitzekessel A durch die Regelklappe K6 und vor dem Gewebefilter F durch die Regelklappe K9 Kühlluft eingeführt (Fig. 1). Die Brenner B0 bis B3 werden mit Luft $\dot{m}_{LB}$ bei konstantem Vordruck durch den Ventilator V3 versorgt. Ebenso wird die für die Brenner erforderliche Gasmenge $\dot{m}_G$ bei konstantem Vordruck zugeführt.

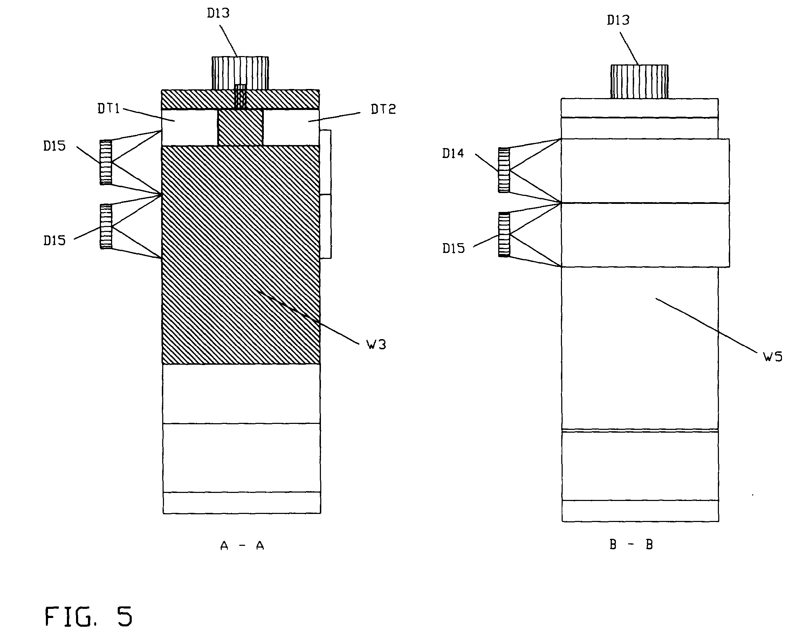

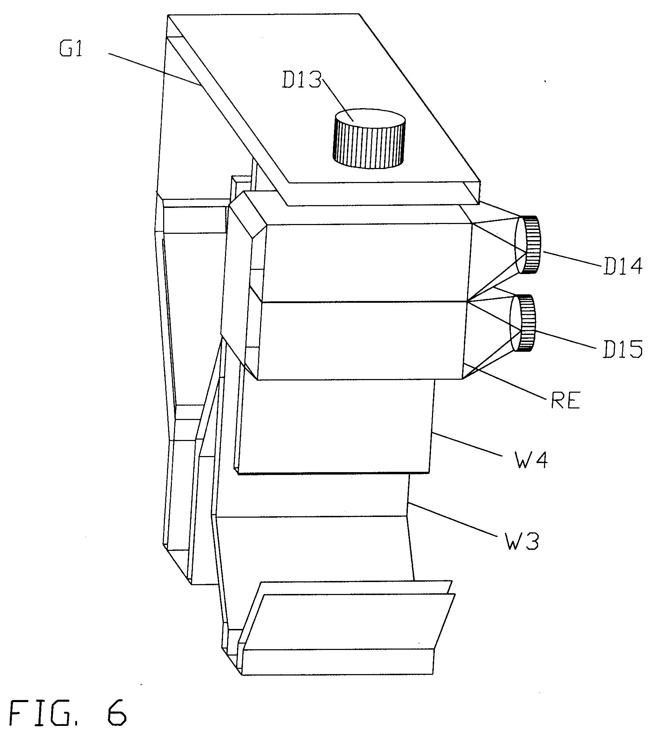

Fig. 2 zeigt die Muffel M und die Nachverbrennungskammer N in verschiedenen Ansichten ohne die eingebauten Brenner B0 bis B3. Fig. 3 und 6 erhalten eine perspektivische Darstellung der Muffel M und der Nachverbrennungskammer N. Zur weiteren Verdeutlichung dient noch das Schnittbild gemäß Fig. 4 mit den dazugehörigen weiteren Schnitten, die aus Fig. 5 hervorgehen.

Wie in Fig. 1 gezeigt, besteht die Muffel M aus einem pyramidenförmigen Unterteil MP und einem quaderförmigen Oberteil MQ. In der Anschlußebene e (Rollenebene) gemäß Fig. 3 sind drei drehbare Rollen R1, R2 und R3 zur Aufnahme des Sarges SA vorgesehen (Fig. 3 und 4). Oberhalb des Sarges SA sind in den Begrenzungswänden des quaderförmigen Teils MQ auf beiden Seiten jeweils 3 Öffnungen D1, D2 und D3 bzw. D4, D5 und D6 für die Zufuhr der vorgewärmten Verbrennungsluft angeordnet (Fig. 2). An diesen Wänden befinden sich unter einem Winkel von 35° auch die beiden Einbauöffnungen D16 und D17 für die Muffelbrenner B0 und B1. Unterhalb der Rollen wird die Verbrennungsluft zu dem pyramidenförmigen Teil durch die Öffnungen D7, D8 und D9 in der Begrenzungswand WP3 und durch die Öffnungen D10 bis D12 in der Begrenzungswand WP4 zugeführt. Unterhalb des pyramidenförmigen Teils MP der Muffel M ist die Ausglühkammer AK untergebracht die gemäß Fig. 3 und 4 von einer ersten, oberen Drehklappe DK1 und einer zweiten, unteren Drehklappe DK2 begrenzt wird. Während der Verbrennung von den Rollen R1 bis R3 herabfallende Teile werden von der ersten, oberen Drehklappe DK1 aufgefangen und durch Drehung nach Ablauf der Verbrennungszeit in die Ausglühkammer AK befördert. Die Teile befinden sich dann auf der zweiten, unteren Drehklappe DK2.

Zum Ausglühen dient der Ausglühbrenner B3, der in eine Öffnung D22 eingelassen ist (Fig. 2). Nach Ausglühen werden die ausgeglühten Teile durch Drehung der zweiten, unteren Drehklappe DK2 in einen Aschebehälter befördert.

Die Muffel ist durch zwei Durchtritte DT1 und DT2 gemäß Fig 2 und 5 mit einer Nachverbrennungskammer N verbunden, der wiederum gemäß Fig. 1 aus einem quaderförmigen Teil NQ und einem pyramidenförmigen Teil NP besteht. Die Muffel und die Nachverbrennungskammer besitzen die gemeinsame senkrechte Wand W3, welche mit einer weiteren senkrechten Wand W4 einen senkrechten Abgaskanal C1 zur Abgasführung (Fallzug) bildet. Zur Nachverbrennung dient der Nachbrenner B2, der durch die Öffnung D18 in die Decke G1 eingelassen ist. Die Wand W4 bildet mit einer weiteren Wand W5 einen weiteren senkrechten Abgaskanal C2 (Steigzug). Hierdurch strömt das Abgas aufwärts zum Rekuperator RE, der in den Kanal C2 integriert ist. Nach Abkühlung im Rekuperator RE verläßt das Abgas durch die Öffnung D13 die Nachverbrennungskammer N. Durch die Öffnung D15 (Fig. 4, 5 und 6) tritt die kalte Verbrennungsluft in den Rekuperator RE ein und verläßt diesen durch die Öffnung D14. Hierbei wird die Verbrennungsluft vorgewärmt und durch die Öffnungen D1 bis D12 in die Muffel und durch die Öffnung D23 und D24 in die Nachverbrennungskammer eingeblasen.

Das in der Ausglühkammer AK entstehende Abgas strömt über zwei Abgaskanäle C3 und C4, die sich in der Begrenzungswand WP1 des pyramidenförmigen Teils MP der Muffel befinden, zur Muffel (Fig.2). Das Ende dieser Kanäle schließt mit der Rollenebene e ab (Fig.3).

Für eine vorteilhafte Ausführung der Vorrichtung haben sich folgende Größe als günstig herausgestellt:

- Luftzahl für die Lack- und Holzverbrennung 1,6 bis 1,8
- Luftzahl für die Körperverbrennung 2,2 bis 2,5
- Sauerstoffgehalt am Austritt der Nachverbrennungskammer 10 bis 12 Vol-%)
- Unterdruck in der Muffel 50 Pa
- Temperatur des Abgases am Austritt der Muffel 650 bis 700°C
- Temperatur des Abgases am Austritt der Nachverbrennungskammer (Eintritt Rekuperator) 850 bis 900°C
- Temperatur der Verbrennungsluft am Eintritt in die Muffel 350 bis 450°C
- Achswinkel der Muffelbrenner B0 und B1 zu den Wänden W1 und W2 ca. 35°, Achsabstand zur Rollenebene e a = ca. 850 mm, paralleler Verlauf der Achsen der Muffelbrenner B0 und B1 zur Decke G1
- Abstand der Mittelachsen der Öffnungen D1, D2 und D4, D5 von der Rollenebene e b = 750 mm
- Abstand der Mittelachsen der Öffnungen D3 und D6 von der Rollenebene e c = ca. 600 mm
- Abstand der Mittelachsen der Öffnungen D7, D8 und D10, D11 von der Rollenebene e d = ca. 600 mm
- Abstand der Mittelachsen der Öffnungen D9 und D12 von der Rollenebene e f=800 mm

- Abstand der Mittelachsen der Öffnungen D23 und D24 von der Decke G1 g = ca. 600 mm
- Neigungswinkel der Wände WP1 und WP2 der Muffel ca. 55°
- Neigungswinkel der Wände WP3 und WP4 der Muffel ca. 75°
- Neigungswinkel der Wände WN1 und WN2 der Nachverbrennungskammer ca. 45°
- Neigungswinkel der Wände WN3 und WN4 der Nachverbrennungskammer ca. 55°

**Patentansprüche**

1. Verfahren und Vorrichtung zur Einäscherung leblosen, menschlichen Körpers, bei dem der menschliche Körper, der sich in der Regel in einem Sarg befindet, in einer vorgewärmten Muffel durch Zufuhr von Wärme über die sequentiell ablaufenden Teilvorgänge, Lackverbrennung am Sarg, Verbrennung des Sargwerkstoffes, Verdampfung des Wasseranteils des Körpers und Verbrennung der organischen Masse des Körpers eingeäschert und anschließend in einer Ausglühkammer von den restlichen noch nicht oxidierten organischen Stoffen befreit wird, wobei die bei der Einäscherung entstehenden Abgase durch Wärmeabgabe an Luft und/oder Wasser abgekühlt und anschließend in einem mechanischen Filter von mitgeführten Staubteilchen befreit werden, gekennzeichnet durch folgende Merkmale:

a) der Sarg SA mit dem darin enthaltenen Körper wird in einer gekapselten Schleuse LS mit Hilfe einer in dieser angebrachten Transsportvorrichtung gehoben, bei geöffnetem Muffelschieber MS horizontal in eine Muffel M bei einer Muffeltemperatur von 650 bis 750°C, gemessen im Abgasstrom am Austritt aus der Muffel M, gefördert (Fig. 1) und dort auf horizontal angeordnete, drehbare Rollen R1, R2 und R3, quer zu diesen aufgesetzt, danach die Transportvorrichtung in die Ausgangslage zurückgefahren und der Muffelschieber MS geschlossen;

b) über die im pyramidenförmigen Teil MP der Muffel M angebrachte Öffnungen D7 bis D12 (Fig. 2) sowie über oberhalb der Rollenebene e (Fig.3) im quaderförmigen Teil MQ der Muffel M angebrachte Öffnungen D1 bis D6 gelangt die Verbrennungsluft für die Lack-, Sargwerkstoff sowie die Körperverbrennung bei einer Temperatur von 350 bis 450°C in die Muffel bei Austrittsgeschwindigkeiten von 5 bis 22 m/s und leitet sequentiell die Verbrennung des Lackes am Sarg, die Verbrennung des Sargwerkstoffes, die Verdampfung des Wasseranteils des Körpers und die Verbrennung des größten Teils der organischen Masse des Körpers ein, wobei die genannten Vorgänge insgesamt 45 bis 55 Minuten für ein Körpergewicht von 75kg dauern und die Luftzahl bei der Verbrennung des Lackes und des Sargwerkstoffes auf 1,6 bis 1,8 und die Luftzahl bei der Verbrennung des Körpers auf 2,2 bis 2,5 gehalten wird;

c) während der Körperverbrennung, die für ein Körpergewicht von 75 kg ca. 30 bis 35 min. dauert, wird die Abgastemperatur beim Austritt aus der Muffel (vor den Durchtritten DT1 und DT2, Fig. 3 und 5) auf 650 bis 700°C gehalten, bei Unterschreitung dieser Temperatur schalten sich zwei geregelte Muffelbrenner B0 und B1 (Fig. 1) mit einer maximalen Leistung von jeweils 230 kW automatisch ein, deren Flammen die Sargorberkanten berühren, und die Temperatur im Abgas am Muffelaustritt auf 650 bis 700°C durch Regelung der Brennstoffzufuhr halten, bis der Brennstoffmassenstrom einen Mindestwert (ca. 20% der maximalen Leistung) unterschreitet und dadurch zur Abschaltung der Muffelbrenner B0 und B1 führt, während der Vorgänge gemäß b) herabfallende, nahezu oxidierte Teile werden von einer ersten, oberen Drehklappe DK1 aufgefangen und zwecks weiterer Oxidation über die Öffnungen D9 und D12 (Fig. 1 und 2) mit Luft mit einer Temperatur von 350 bis 450 angeblasen;

d) nach Beenden der Vorgänge gemäß b) schalten sich die Muffelbrenner B0 und B1, sofern diese noch im Betrieb waren, automatisch ab, die Rollen werden in eine leichte Rotationsbewegung um ihre eigene Achse versetzt, so daß die noch nicht herabgefallenen, jedoch nahezu vollständig oxidierten Teile durch die Räume zwischen den Rollen nach unten auf eine erste, obere Drehklappe DK1 fallen, welche die Teile nach Ablauf der Vorgänge gemäß c) durch eine Drehung um 90° in eine Ausglühkammer AK (Fig. 1) befördert, deren Beheizung nach Drehen der ersten, oberen Drehklappe DK1 in ihre Ausgangslage durch Einschalten eines horizontal und unterhalb der ersten, oberen Drehklappe DK1 angeordneten Ausglühbrenners B3 (Fig. 1) bei einer Leistung von ca. 90 kW sichergestellt wird und deren Boden mit einer zweiten, unteren Drehklappe DK2 (Fig. 1) abschließt, auf der die über die erste, obere Drehklappe DK1 eingeführten Teile bis zum vollständigen Ausglühen (Mineralisieren) ruhen, wobei der Vorgang des Ausglühens ca. 20 bis 25 Minuten dauert und das dabei entstehende Abgas durch zwei Kanäle C3 und C4 (Fig. 2) in die Muffel M zwischen dem Muffelschieber MS und dem Sarg SA (Fig. 2) gelangen und hierdurch eine zusätzliche Wärmezufuhr bewirken;

e) nach dem Ausglühvorgang gemäß d) wird der Ausglühbrenner B3 abgeschaltet und die zweite, untere Drehklappe DK2 um 90° gedreht, so daß die ausgeglühten Teile (Urnenasche) in einen Aschetransportbehälter abgefüllt werden können, danach wird die zweite, untere Drehklappe DK2 in ihre Ausgangslage zurückgedreht und der Ausglühbrenner B3 auf 20% seiner vollen Leistung zugeschaltet;

f) nach Drehen der ersten, oberen Drehklappe DK1 und nach dem Beginn des Ausglühvorganges gemäß d) erfolgt die erneute Beschickung der Muffel M mit dem nächsten Sarg, wobei der Ausglühbrenner B3 auf ca. 100 % seiner vollen Leistung eingeregelt wird;

g) die während der Vorgänge gemäß b) und d) entstehenden Abgase strömen in der Muffel M quer zum Sarg und Körper nach oben und gelangen über zwei Durchtritte DT1 und DT2 in eine Nachverbrennungskammer N (Fig. 1) zur Oxidation von Kohlenmonoxid und der in den Abgasen vorhandenen organischen Stoffe, wobei die Wärmezufuhr über eine durch einen Nachbrenner B2 mit einer maximalen Leistung von 230 kW erzeugte Flamme erfolgt, die in Strömungsrichtung in den abwärts gerichteten Abgasstrom hineinragt und eine Abgastemperatur von 850 bis 900°C am Austritt der Nachverbrennungskammer gewährleistet;

h) die Abgase verlassen die Nachverbrennungskammer nach einer Verweilzeit von mindestens 0,5 Sekunden, durchströmen einen nachgeschalteten Rekuperator RE (Fig. 1), geben hierbei Wärme an die ankommende Verbrennungsluft ab, um diese über die eingebaute Heizfläche von 20 bis 40°C auf 350 bis 450°C aufzuheizen und sich dabei auf 650 bis 600°C abzukühlen, wobei die aufgeheizten Verbrennungsluftströme jeweils über die Öffnungen D1 bis D12 der Muffel M und über zwei weitere Öffnung D23 und D24 der Nachverbrennungskammer N zugeführt werden (Fig. 2).

i) der Muffel M wird über die Öffnungen D1 bis D12 und der Nachverbrennungskammer N über die Öffnungen D23 und D24 soviel Verbrennungsluft zugeführt, daß sich im Abgas $\dot{m}_{A2}$ am Austritt der Nachverbrennungskammer N (Eintritt Rekuperator RE) ein Sauerstoffgehalt von 10 bis 12 Volumenprozent ergibt,

der überschüssige Luftstrom $\dot{m}_{LE}$ wird dem aus dem Rekuperator RE austretenden Abgasstrom $\dot{m}_{A2}$ zugesetzt.

2. Verfahren nach Anspruch 1, dadurch gekennzeichnet, daß der Anteil der durch die Öffnungen D7 bis D12 in die Muffel M eingeführte Verbrennungsluft 80% des insgesamt durch die Öffnungen D1 bis D12 in die Muffel M sowie durch die Öffnungen D23 und D24 und in die Nachverbrennungskammer N eingeführten Verbrennungsluftmassenstromes betragt.

3. Verfahren nach Anspruch 1 und 2, dadurch gekennzeichnet, daß der Massenstrom des überschüssigen, nicht durch den Rekuperator RE strömenden Luftstroms $\dot{m}_{LE}$ mit einer Regelklappe K5, die von diesem durchflossen wird, eingestellt wird, in der Weise, daß im Luftstrom $\dot{m}_{L1}$ am Austritt des Rekuperators RE eine Temperatur von maximal 470°C resultiert.

4. Verfahren nach Ansprüchen 1 und 2, dadurch gekennzeichnet, daß der Sauerstoffgehalt am Austritt der Nachverbrennungskammer N über den durch den Rekuperator RE gehenden Verbrennungsluftmassenstrom $\dot{m}_{L1}$, welcher durch die Drehzahl des Ventilators V1 beeinflußt wird, eingestellt wird.

5. Verfahren nach Anspruch 1, dadurch gekennzeichnet, daß beim Ausfall des Ventilators V1 Kühlluft über eine Klappe K4 dem Verbrennungsluftstrom $\dot{m}_{L1}$ hinter dem Ventilator V1 zugesetzt wird, um den Rekuperator RE vor Überhitzungen zu schützen.

6. Verfahren nach Anspruch 1, dadurch gekennzeichnet, daß der hinter dem Rekupertor RE durch Luft-/Abgas-Vermischung $\dot{m}_{LE}$ und $\dot{m}_{A2}$ resultierende Abgasstrom einem nachgeschalteten Abhitzekessel A (Fig. 1) zugeführt und dort durch Wärmeabgabe an einen Kühlwasserkreislauf auf Temperaturen von 130 bis 150°C abgekühlt wird, wobei zusätzlich über die Klappe K6 dem Abgas Kühlluft zugeführt wird, falls die Abgastemperatur am Eintritt des Abhitzekessels A durch eine Störung 700°C übersteigt.

7. Verfahren nach Anspruch 1 und 6, dadurch gekennzeichnet, daß dem Abgasstrom $\dot{m}_{A3}$ hinter dem Abhitzekessel feines Aktivkohle/Kalk-Gemisch $\dot{m}_K$ zudosiert wird, welches gemeinsam mit dem mitgeführten Staub in einem nachgeschalteten Gewebefilter F (Fig. 1) abgeschieden und einer Entsorgung zugeführt wird.

8. Verfahren nach Anspruch 1 und 6, dadurch gekenn-zeichnet, daß dem Abgasstrom $\dot{m}_{A3}$ vor dem Gewebefilter über die Klappe K9 (Fig. 1) Kühlluft zugesetzt wird, wenn die Abgastemperatur 150°C übersteigt, wobei das Gewebefilter durch Schließen von Klappen K12, K13 und Öffnen einer Klappe K11 umgangen wird.

9. Verfahren nach Anspruch 1, dadurch gekennzeichnet, daß die Förderung des Abgasstroms hinter dem Gewebefilter F durch einen Saugzugventilator V2 (Fig. 1) erfolgt, der in der Muffel M einen Unterdruck von ca. 50 Pa aufrechterhält, wobei über eine Druckmessung in der Muffel die Drehzahl des Saugzugventilators beeinflußt wird.

10. Vorrichtung zur Durchführung des Verfahrens, bestehend aus einer Muffel M mit einem Muffelschieber MS, einer Nachverbrennungskammer N, einem Rekuperator RE zur Luftvorwärmung und Abgaskühlung sowie einem Abhitzekessel A, dadurch gekennzeichnet, daß die Muffel M aus einem pyramidenförmigen Unterteil MP und einem quaderförmigen Oberteil MQ besteht, in deren Anschlußebene drei drehbare Rollen R1, R2 und R3 zur Aufnahme des Sarges SA vorgesehen sind, wobei oberhalb der Rollenebene e (Fig. 2 und 3) jeweils drei Öffnungen D1, D2 und D3 bzw. D4, D5 und D6 in den Wänden W2 und W1 (Fig. 2) des quaderformigen Teils MQ zur Aufnahme eines Teils der Verbrennungsluft angeordnet sind, ferner zur Aufheizung und Temperaturregelung zwei Muffelbrenner B0 und B1 in den Öffnungen D16 und D17 der Begrenzungswände W1 und W2 des quaderförmigen Teils, während die Zufuhr der Verbrennungsluft unterhalb des Sarges SA im pyramidenförmigen Teil MP der Muffel M durch jeweils drei weitere Öffnungen D7, D8 und D9 bzw. D10, D11 und D12 in den Wänden WP3 und WP4 erfolgt, und daß sich an die Muffel M eine Nachverbrennungskammer N, bestehend aus einem quaderförmigen Teil NQ und einem pyramidenförmigen Teil NP mit einer gemeinsamen Decke G1 und einer gemeinsamen senkrechten Wand W3 anschließt, welche zur Abgasführung zwei Durchtritte DT1 und DT2 enthält und gemeinsam mit einer weiteren, mit der Decke C1 verbundenen senkrechten Wand W4 einen senkrechten Abgaskanal C1 (Fallzug) bildet, wobei die Wand W4 ihrerseits mit einer äußeren Wand W5 einen weiteren Abgaskanal C2 (Steigzug) erzeugt, an dessen oberen Ende ein Rekuperator RE zur Abgaskühlung und Verbrennungsluftvorwärmung angebracht ist, welcher abgasseitig über die Öffnung D13 und die Abgasleitung L8 mit einem wassergekühlten Abhitzekessel A zur weiteren Abgaskühlung verbunden ist und luftseitig einerseits über den Stutzen D14 mit einer Leitung L1 für die Verbrennungsluft, in der sich ein Verbrennungsluftventilator V1 befindet, in Verbindung steht und andererseits über den Stutzen D15 an eine Leitung L3 angeschlossenen ist, die mit den Abzweigen L4 und L5 zur Verbrennungsluftzufuhr in die Muffel durch Öffnungen D1 bis D6 (quaderförmiger Teil MQ der Muffel) und D7 bis D12 (pyramidenförmiger MP Teil der Muffel) sowie mit dem Abzweig L6 zur Verbrennungsluftzufuhr in den Kanal C1 der Nachverbrennung durch die Öffnungen D23 und D24 verbunden ist.

11. Vorrichtung nach Anspruch 10, dadurch gekennzeichnet, daß zum Einbau der Hauptbrenner B0 und B1 am quaderförmigen Teil MQ der Muffel M zwei Öffnungen D16 und D17 vorgesehen sind, deren Achsen in einem Winkel von 35° zu den mit diesen Öffnungen in Verbindung stehenden Wänden W1 und W2(Fig. 2) stehen, wobei der Achsabstand a zur Rollenebene e ca. 850 mm beträgt.

12. Vorrichtung nach Anspruch 10, dadurch gekennzeichnet, daß im oberen Teil des Abgaskanals C1 in der Decke G1 ein Nachbrenner B2 angeordnet ist (Fig. 3), dessen Achse parallel zur Achse des Kanals C1 verläuft und für dessen Einbau in der Decke G1 eine Öffnung D18 (Fig. 3) vorgesehen ist.

13. Vorrichtung nach Anspruch 10, dadurch gekennzeichnet, daß die im quaderförmigen Teil MQ der Muffel M für die Verbrennungsluft vorgesehenen Öffnungen D1 und D2 sowie die zu diesen symmetrisch stehenden Öffnungen D4 und D5 (Fig. 2) in einem Abstand b von ca. 750 mm gemessen von der Rollenebene e angebracht sind, während die tieferen Öffnungen D3 und D6 einen Abstand c zur Rollenebene von ca. 600 mm haben.

14. Vorrichtung nach Anspruch 10, dadurch gekennzeichnet, daß die im pyramidenförmigen Teil MP der Muffel für die Verbrennungsluft vorgesehenen Öffnungen D7 und D8 sowie die zu diesen symmetrisch stehenden Öffnungen D10 und D11 (Fig. 2) in einem Absand d von ca. 600 mm gemessen von der Rollenebene e angebracht sind, während die tieferen Öffnungen D9 und D12 einen Abstand f zur Rollenebene von ca. 800 mm haben.

15. Vorrichtung nach Anspruch 10, dadurch gekennzeichnet, daß die Wände WP1 und WP2 des pyramidenförmigen Teils MP der Muffel M (Fig. 2) in einem Winkel von ca. 55° zu der Rollenebene e stehen, während die beiden anderen Wände WP3 und WP4 mit der Rollenebene e einen Winkel von ca. 75° bilden.

16. Vorrichtung nach Anspruch 10, daß in der Wand W5 (Fig. 2) der Nachbrennkammer N eine Revisionsöffnung D19 vorgesehen ist.

17. Vorrichtung nach Anspruch 10, dadurch gekennzeichnet, daß die Wände WN1 und WN2 der Nachverbrennungskammer N (Fig. 2) in der Reihenfolge mit den Ebenen der angrenzenden Wänden W3 und W5 einen spitzen Winkel von ca. 45° bilden, während die Wände WN3 und WN4 in einem spitzen Winkel von ca. 55° zu den Ebenen der angrenzenden Wände stehen.

18. Vorrichtung nach Anspruch 10, dadurch gekennzeichnet, daß unterhalb des pyramidenförmigen Teils NP der Nachverbrennungskammer N (Fig. 2) für den Flugaschenabzug eine quadratische Öffnung D20 vorgesehen ist.

19. Vorrichtung nach Anspruch 10, dadurch gekennzeichnet, daß sich an die untere Begrenzungsfläche des pyramidenförmigen Teils MP der Muffel M eine quaderförmige Ausglühkammer AK (Fig. 3 und 4) anschließt, wobei eine erste, obere Drehklappe DK1 (Fig. 3 und 4) zur Aufnahme der von den Rollen herabfallenden, verbrannten Teile sowie zur Beförderung dieser Teile in eine Ausglühkammer AK die beiden Innenräume von MP und AK voneinander trennt und durch ihre Drehung herabgefallene Teile in die Ausglühkammer AK befördert.

20. Vorrichtung nach Anspruch 10, dadurch gekennzeichnet, daß die in der Muffel M angebrachten Rollen R1, R2 und R3 (Fig. 3 und 4) um ihre Längsachse in beiden Richtungen drehbar gelagert sind, um durch ihre Drehungen liegengebliebene Teile in Richtung der ersten, oberen Drehklappe DK1 zu befördern.

21. Vorrichtung nach Anspruch 19, dadurch gekennzeichnet, daß die Ausglühkammer AK (Fig. 3 und 4) im unteren Bereich durch eine zweite, untere Drehklappe DK2 (Fig. 3 und 4) zur Aufnahme eingeäscherter Teile begrenzt wird, welche durch Drehung um ihre Drehachse die ausgeglühten Teile aus der Ausglühkammer in einen Aschebehälter zur weiteren Behandlung befördert.

22. Vorrichtung nach Anspruch 19, dadurch gekennzeichnet, daß in der Ausglühkammer AK ein Ausglühbrenner B3 (Fig: 3 und 4) zum Ausglühen eingeführter Teile vorgesehen ist, dessen Mittelachse senkrecht zur Einbauwand steht, in die die Öffnung D22 (Fig. 2) für den Brennereinbau eingelassen ist.

23. Vorrichtung nach Anspruch 10, dadurch gekennzeichnet, daß die Ausglühkammer AK zur Führung der beim Ausglühen entstehenden Abgase durch zwei Kanäle C3 und C4 (Fig. 2) mit der Muffel M verbunden ist, wobei diese Kanäle jeweils einen rechteckigen Querschnitt besitzen, ihre Austrittsquerschnitte an der Rollenebene e (Fig. 2 und 3) enden und in die Wand WP1 des pyramidenförmigen Teils MP der Muffel M unter gleichem Winkel zur Rolleneben e integriert sind.

24. Vorrichtung nach Anspruch 10, dadurch gekennzeichnet, daß im Kanal C1 der Nachverbrennungskammer N (Fig. 2) zwei Öffnungen D23 und D24 im Abstand g von ca. 600 mm zur Decke C1 für zusätzliche Luftzufuhr vorgesehen sind.

FIG.1

FIG. 2

FIG. 3

FIG. 4

D13

W5

D14

D15

B — B

DT2

D13

W3

DT1

D15

D15

A — A

FIG. 5

15

FIG. 6

# EUROPÄISCHER RECHERCHENBERICHT

**Europäisches Patentamt**

Nummer der Anmeldung

EP 97 11 1721

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 25 17 199 A (STROHMENGER)<br><br>* Seite 6, Zeile 19 - Seite 7, Zeile 22; Abbildungen 1,2 *<br>--- | 1,10,19,21 | F23G1/00<br>F23G5/16<br>F23G5/12<br>F23G5/50<br>F23L15/04<br>F23J15/02 |
| A | DE 12 58 009 A (RICHTER & SCHÄDEL)<br><br>* Spalte 2, Zeile 18 - Spalte 3, Zeile 58; Abbildungen 1-5 *<br>--- | 1,10,19,21,22 | |
| A | GB 1 026 183 A (UNITED GAS INDUSTRIES)<br><br>* Seite 2, Zeile 82 - Seite 2, Zeile 119 *<br>* Seite 3, Zeile 31 - Seite 3, Zeile 58 *<br>* Seite 3, Zeile 77 - Seite 3, Zeile 100 *<br>* Seite 4, Zeile 21 - Seite 4, Zeile 44 *<br>* Abbildungen 1-7 *<br>--- | 1,10,16,18,19,21,22 | |
| A | FR 1 310 361 A (WISTRA OFENBAU)<br><br>* Seite 3, Spalte 1, Absatz 3 - Seite 3, Spalte 2, Absatz 1; Abbildung *<br>--- | 1,10,12,18 | |
| A | GB 1 059 972 A (UNITED GAS INDUSTRIES)<br>* Seite 3, Zeile 23 - Seite 3, Zeile 90 *<br>* Seite 3, Zeile 104 - Seite 3, Zeile 125 *<br>* Seite 5, Zeile 37 - Seite 5, Zeile 61 *<br>* Abbildungen 2,3,6,7 *<br>--- | 1,10 | |
| A | DE 861 731 A (TOPF)<br>----- | | |

**RECHERCHIERTE SACHGEBIETE (Int.Cl.6)**

F23G

Der vorliegende Recherchenbericht wurde für alle Patentansprüche erstellt

| Recherchenort | Abschlußdatum der Recherche | Prüfer |
|---|---|---|
| DEN HAAG | 17.November 1997 | Phoa, Y |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................

& : Mitglied der gleichen Patentfamilie, übereinstimmendes Dokument

EPO FORM 1503 03.82 (P04C03)